# FASCICULE DE BREVET EUROPEEN

(11) **EP 1 911 998 B1**
(45) Date de publication et mention de la délivrance du brevet: **27.08.2014**
(21) Numéro de dépôt: 07118222.4
(22) Date de dépôt: 10.10.2007
(51) Int. Cl.: F16J 15/42

(54) **Système d'étanchéité entre deux arbres tournants coaxiaux**
Abdichtungssystem zwischen zwei koaxialen Drehwellen
Sealing system between two coaxial rotating shafts

(30) Priorité: 11.10.2006 FR 0654193
(43) Date de publication de la demande: 16.04.2008
(73) Titulaire: SNECMA, 75015 Paris (FR)
(72) Inventeur: Gille, Laurent, 77190 Dammarie les Lys (FR); Morreale, Serge, 77390 Guignes (FR)
(74) Mandataire: Intès, Didier Gérard André

(56) Documents cités:
- FR-A- 1 284 281

## Description

L'invention se rapporte à un système d'étanchéité entre deux arbres tournants coaxiaux et concerne plus particulièrement un nouveau type de joint dynamique agencé entre ces deux arbres.

Dans un turboréacteur d'avion, par exemple, il est nécessaire de définir et isoler une enceinte entourant un organe mécanique tel qu'un roulement ou pignon installé entre deux arbres tournants. Dans cette enceinte, de l'huile est injectée pour lubrifier et refroidir ledit organe mécanique. L'isolation de l'enceinte nécessite notamment un joint entre les deux arbres tournants.

Pour ce type d'application, on distingue des joints avec contact et d'autres sans contact (FR-A-1.284.281). Un joint avec contact (joint en carbone ou joint à brosse) implique une usure. Il doit donc être changé périodiquement. En outre, pour le joint en carbone, sa fragilité rend le montage délicat. Un faible débit d'air entrant dans l'enceinte est le plus souvent nécessaire pour entretenir une pressurisation de celle-ci. L'usure est encore plus importante lorsque les arbres sont contra-rotatifs.

Un joint sans contact, tel qu'un joint labyrinthe, nécessite un débit d'air beaucoup plus important et il est parfois difficile d'obtenir la pression souhaitée. De plus, un mélange air-huile se crée dans l'enceinte, ce qui nécessite un dispositif de déshuilage avant évacuation de l'air. L'efficacité de ce dispositif est inversement proportionnelle au débit d'air à traiter. Le compromis est donc difficile à établir. De plus, le dispositif de déshuilage est coûteux, encombrant et lourd.

L'invention permet de surmonter ces différents inconvénients en proposant une structure de joint sans apport d'air externe et sans usure préjudiciable à l'efficacité du système, à long terme.

A cet effet, l'invention concerne en premier lieu un système d'étanchéité entre deux arbres tournants coaxiaux et superposés, respectivement un arbre interne et un arbre externe tubulaire, caractérisé en ce qu'il comporte, lié à l'arbre interne, au moins un ensemble annulaire sectorisé de léchettes, mobile sous l'effet de la force centrifuge et se déplaçant sensiblement radialement vers l'arbre externe et un réceptacle annulaire pour liquide, agencé à la surface intérieure de l'arbre externe en regard de bords courbes desdites léchettes, lesdits bords courbes plongeant dans ce liquide lorsque lesdites léchettes sont déplacées sous l'effet de la force centrifuge.

Ainsi, lorsque l'arbre externe est en rotation, et que du liquide est déposé dans ce réceptacle annulaire, un anneau de liquide centrifugé est formé, dans lequel plongent lesdites léchettes.

De préférence, le liquide est de l'huile.

De préférence, le système comporte deux ensembles précités de léchettes décalés angulairement l'un par rapport à l'autre. Par exemple, chaque ensemble pourra comporter quatre léchettes couvrant chacune un secteur de 90° à l'état de repos.

Selon un mode de réalisation possible, les deux ensembles de léchettes sont agencés en vis-à-vis.

Selon une autre possibilité, les deux ensembles de léchettes sont superposés circonférentiellement l'un sur l'autre.

Selon un exemple préféré, une léchette précitée d'un même ensemble, comporte un élément d'obturation comprenant une nervure plate à bord courbe, sensiblement radiale tandis que ledit élément d'obturation est rattaché à une lame flexible ancrée au fond d'un support dans lequel est définie une cavité cylindrique ouverte à une extrémité, ledit support étant fixé à la surface extérieure dudit arbre interne. Ledit élément d'obturation coopère avec l'extrémité ouverte de ladite cavité cylindrique.

De préférence, l'élément d'obturation comporte une portion cylindrique adjacente à ladite nervure plate et rattachée le long d'un bord de celle-ci.

Par exemple, ladite lame flexible s'étend à partir du milieu de cette portion cylindrique. Ladite lame flexible peut se rattacher près d'une extrémité de l'élément d'obturation, pour favoriser le déplacement d'une des extrémités, en priorité, lors de la mise en rotation.

Selon une autre caractéristique remarquable, ladite surface intérieure de l'arbre externe comporte une gorge annulaire située en regard dudit ensemble annulaire sectorisé de léchettes et un gicleur d'huile ou analogue est disposé au voisinage de cette gorge et orienté pour y déposer de l'huile à chaque mise en rotation dudit arbre extérieur.

L'invention est particulièrement indiquée lorsque les deux arbres sont contra-rotatifs.

L'invention sera mieux comprise et d'autres avantages de celle-ci apparaîtront mieux à la lumière de la description de plusieurs modes de réalisation possibles d'un système d'étanchéité conforme à son principe, donnée à titre d'exemple et faites en référence aux dessins annexés dans lesquels :
- la figure 1 est une vue schématique en coupe d'un système d'étanchéité entre deux arbres coaxiaux, représenté au repos ;
- la figure 1A est une coupe I-I de la figure 1 ;
- la figure 2 est une vue analogue à la figure 1 illustrant le fonctionnement du système d'étanchéité lorsque les deux arbres sont en rotation ;
- la figure 2A est une coupe II-II de la figure 2 ;
- la figure 3 est une vue analogue à la figure 1 illustrant une variante ;
- la figure 4 est une vue analogue à la figure 2 illustrant cette même variante, en fonctionnement ;
- la figure 5 est une vue en perspective de deux ensembles de léchettes, représentés avec décalage axial, au repos ; et
- la figure 6 représente les mêmes ensembles de léchettes représentés en fonctionnement.

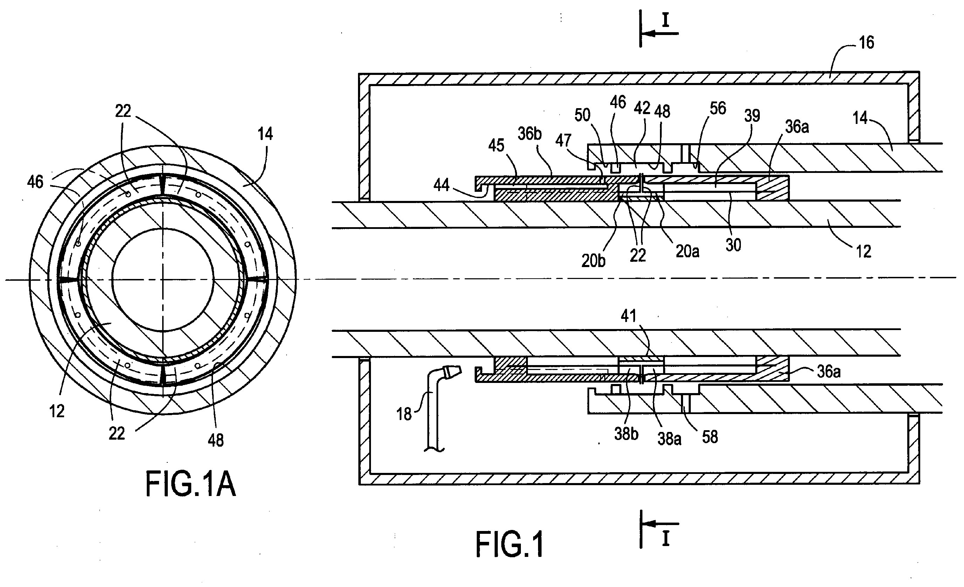

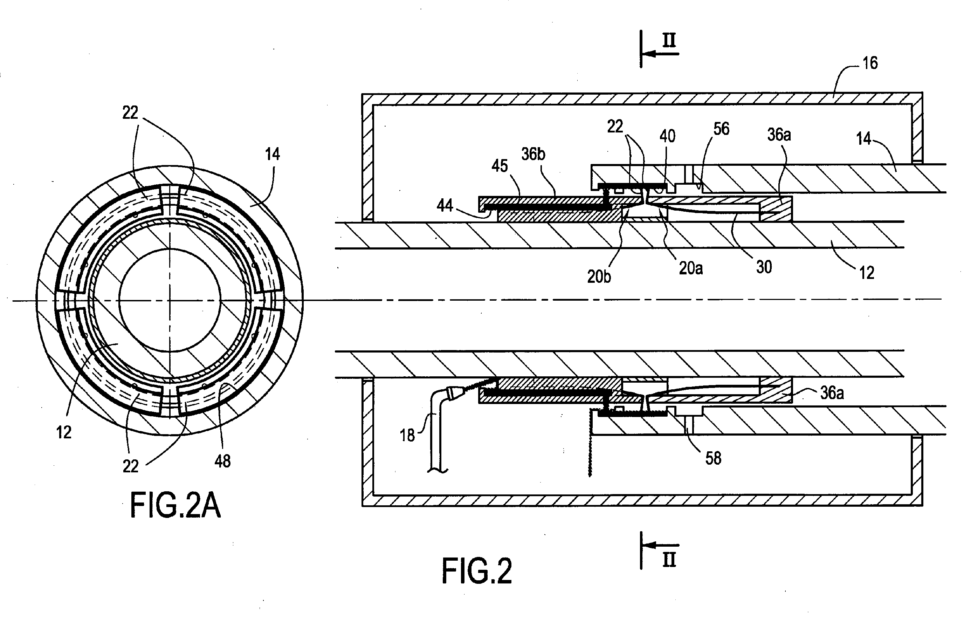

En considérant plus particulièrement les figures 1 et 2 et les coupes correspondantes, on a représenté deux arbres tournants coaxiaux, respectivement un arbre interne 12 et un arbre externe 14 tubulaire. Les deux arbres sont superposés. Le système d'étanchéité conforme à l'invention est installé entre ces deux arbres tournants, à l'intérieur d'un carter 16 s'étendant entre la surface extérieure de l'arbre interne et la surface extérieure de l'arbre externe. Ce carter abrite un gicleur 18 de liquide, en l'occurrence ici de l'huile. Cette huile alimente le système d'étanchéité dès que l'arbre externe est en rotation.

Selon une caractéristique importante de l'invention, le système d'étanchéité comporte au moins un ensemble annulaire 20a, 20b sectorisé de léchettes 22, mobiles sous l'effet de la force centrifuge et se déplaçant sensiblement radialement vers l'arbre externe 14 lorsqu'elles sont soumises à cette force. Les léchettes 22 sont raccordées à l'arbre interne.

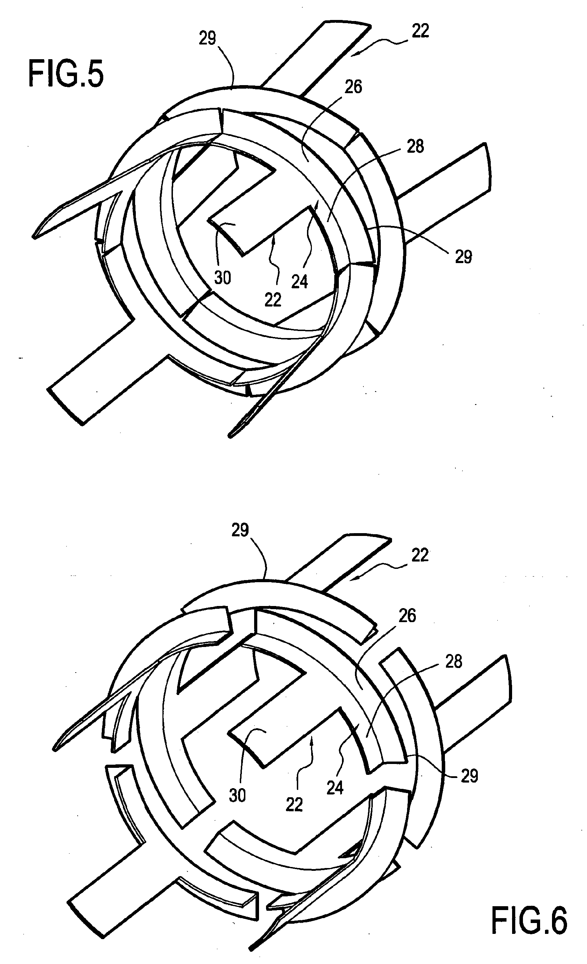

Très préférentiellement, le système d'étanchéité comporte deux ensembles 20a, 20b précités de léchettes, décalés angulairement l'un par rapport à l'autre. L'agencement est particulièrement visible sur les figures 5 et 6. Dans l'exemple des figures 1 et 2, les deux ensembles 20a, 20b de léchettes sont agencés en vis-à-vis. Dans l'exemple, chaque ensemble comporte quatre léchettes 22 courbes occupant un secteur de 90°.

Une léchette 22 précitée d'un même ensemble comporte un élément d'obturation 24 comprenant ici une nervure plate 26 et une portion cylindrique 28 adjacente à ladite nervure plate et rattachée le long d'un bord de celle-ci. La nervure plate fait saillie vers l'extérieur c'est-à-dire en direction de la surface interne de l'arbre externe 14. Elle comporte un bord courbe 29 à contour circulaire. Cette nervure plate 26 s'étend sensiblement dans un plan radial en position de repos.

Par ailleurs, l'élément d'obturation 24 est rattaché à une lame flexible 30 ancrée au fond d'un support 36a ou 36b dans lequel est définie une cavité cylindrique 38a ou 38b. Ce support est cylindrique et fixé à la surface extérieure dudit arbre interne. Cette cavité cylindrique est ouverte à l'extrémité, où se situe l'élément d'obturation 24. La nervure plate 26 s'étend à l'extérieur de la cavité et l'élément d'obturation coopère avec l'extrémité ouverte de ladite cavité. La cavité cylindrique 38a ou 38b est prolongée dans le support par des évidements longitudinaux 39 où s'étendent les lames flexibles 30. Ces dernières sont ancrées au support aux fonds de ces évidements. Dans l'exemple de la figure 1, l'arbre interne comporte deux supports 36a, 36b avec deux cavités cylindriques ouvertes 38a, 38b dont les extrémités ouvertes sont en vis-à-vis. Chaque support 36a, 36b abrite un ensemble de léchettes et celles-ci coopèrent avec l'extrémité ouverte de la cavité 38a, 38b correspondante. En raison de la flexibilité de la languette, chaque léchette peut donc se déplacer sensiblement radialement (avec un léger mouvement de rotation) vers l'arbre externe, sous l'effet de la force centrifuge imprimée par la rotation de l'arbre interne. Une entretoise 41 intercalée entre les deux supports permet d'ajuster la distance axiale séparant les ensembles 20a, 20b.

Par ailleurs, selon une autre caractéristique remarquable de l'invention, un réceptacle annulaire pour liquide, ici constitué par une gorge 42 pratiquée à la surface intérieure de l'arbre externe permet de créer, lorsque l'arbre externe tourne, un anneau liquide centrifugé 40. Celui-ci est entretenu à la surface intérieure dudit arbre externe 14, en regard de bords courbes desdites léchettes, plus particulièrement les bords 29 des nervures 26.

Dans l'exemple, le liquide est avantageusement de l'huile.

La gorge annulaire 42 est située en regard du ou de chaque ensemble annulaire sectorisé de léchettes tandis que le gicleur d'huile est disposé au voisinage de cette gorge et est orienté pour y déposer de l'huile à chaque mise en rotation de l'arbre extérieur. Par conséquent, sous l'effet de la force centrifuge communiquée par la rotation de l'arbre extérieur, le liquide (huile) s'accumule et est maintenu au fond de la gorge annulaire. En fonctionnement, la portion cylindrique 28 vient en appui sur le support 36 en sorte que le bord courbe 29 plonge dans le liquide sans toucher le fond de la gorge 42.

Lorsque les léchettes 22 se déplacent vers l'arbre externe, les bords courbes des nervures plongent dans l'anneau d'huile (voir figure 2) et, en butée à l'extrémité du support 36a ou 36b, se maintiennent dans cette position, sous l'effet de la force centrifuge, assurant l'étanchéité.

Dans le mode de réalisation des figures 1 et 2, une gorge 44 est définie à une extrémité du support 36b solidaire de l'arbre interne et dans lequel est défini la cavité 38b et cette gorge se prolonge par des perçages 45, 47 pratiqués dans le support. Les perçages débouchent radialement en regard de la gorge annulaire 42 pratiquée à la surface intérieure de l'arbre externe, pour alimenter ledit anneau d'huile centrifugé, entretenu dans cette gorge annulaire.

Avantageusement, la gorge annulaire comporte une barrière de tranquillisation 46 agencée entre une partie annulaire 48 où plongent lesdites léchettes et une partie annulaire 50 adjacente, où l'huile est déposée. Plus précisément, cette partie annulaire adjacente se trouve en regard des orifices des perçages 47. La barrière de tranquillisation, globalement annulaire, comporte au moins une échancrure ou analogue permettant à l'huile de passer d'une partie à l'autre.

Une autre gorge annulaire 56 jouxte celle qui est agencée en regard des léchettes. Elle est pratiquée sur la face intérieure de l'arbre externe dans l'espace inter-arbre et communique avec le carter par un drain 58 traversant cet arbre. Une fuite éventuelle d'huile est ainsi récupérée dans le carter. L'huile qui tombe dans le carter peut être récupérée et recyclée.

Comme le montrent les figures 1A et 2A ainsi que les figures 5 et 6, des bords intérieurs courbes des éléments d'obturation 24 sont sensiblement en contact par leurs extrémités lorsque les léchettes ne sont pas soumise à une force centrifuge. En revanche, sous l'effet de la force centrifuge, l'espace entre les extrémités des léchettes augmente, d'où l'intérêt de prévoir deux ensembles de léchettes décalés circonférentiellement. Dans le cas d'un ensemble constitué de quatre léchettes, lesdits ensembles sont décalés de 45°.

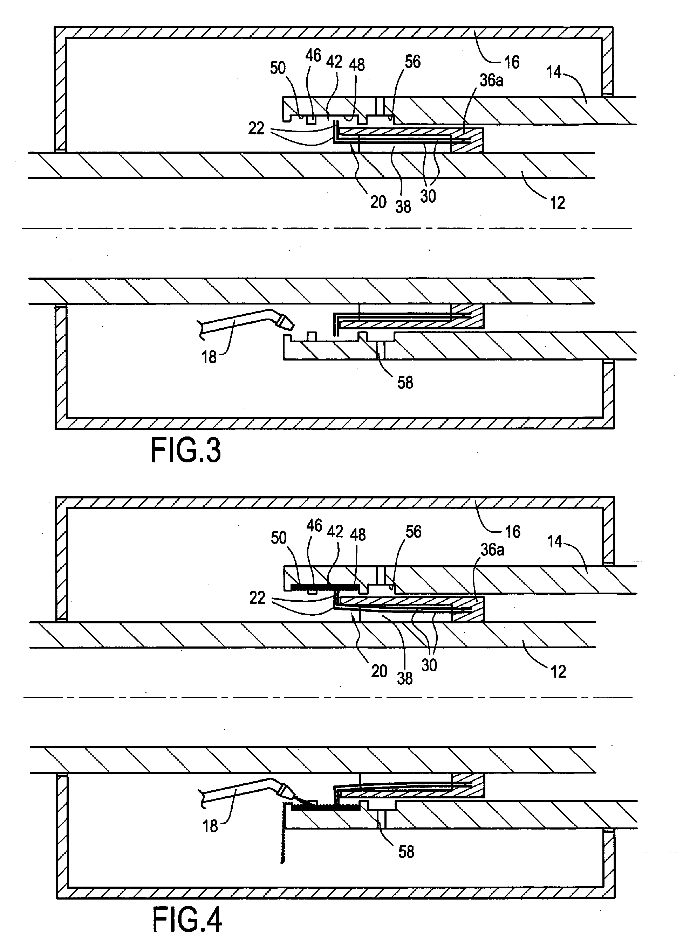

Selon le mode de réalisation des figures 3 et 4, l'arbre interne comporte une seule cavité cylindrique 38 ouverte définie dans un seul support cylindrique 36a rapporté à la surface extérieure de cette arbre. En revanche, les éléments d'obturation 24 des deux ensembles de léchettes sont logés dans cette même cavité cylindrique. Les éléments d'obturation des deux ensembles 20a, 20b de léchettes 22 coopèrent en superposition avec l'extrémité ouverte de cette cavité 38.

Ainsi, les deux ensembles de léchettes sont superposés l'un sur l'autre. Ils sont bien entendu décalés circonférentiellement comme dans l'exemple précédent et pour les mêmes raisons.

Dans ce mode de réalisation où les éléments analogues portent les mêmes références numériques, la buse 18 est directement dirigée vers la gorge annulaire 42 qui matérialise l'anneau de liquide centrifugé. Comme dans l'exemple précédent, la gorge annulaire comporte une barrière de tranquillisation 46 située entre la partie annulaire 48 où plongent les léchettes et la partie annulaire 50 adjacente où l'huile est déposée par le gicleur.

## Revendications

1. Système d'étanchéité entre deux arbres tournants coaxiaux et superposés, respectivement un arbre interne (12) et un arbre externe (14) tubulaire, **caractérisé en ce qu'**il comporte, lié à l'arbre interne, au moins un ensemble annulaire sectorisé de léchettes (22), mobile sous l'effet de la force centrifuge et se déplaçant sensiblement radialement vers l'arbre externe et un réceptacle annulaire (42) pour liquide, agencé à la surface intérieure de l'arbre externe en regard de bords courbes desdites léchettes, lesdits bords courbes plongeant dans ce liquide, lorsque lesdites léchettes sont déplacées sous l'effet de la force centrifuge.

2. Système selon la revendication 1, **caractérisé en ce qu'**il comporte deux ensembles (20a, 20b) précités de léchettes décalés circonférentiellement l'un par rapport à l'autre.

3. Système selon la revendication 2, **caractérisé en ce que** les deux ensembles de léchettes (20a, 20b) sont agencés en vis-à-vis.

4. Système selon la revendication 2, **caractérisé en ce que** les deux ensembles de léchettes sont superposés l'un sur l'autre (figure 3).

5. Système d'étanchéité selon l'une des revendications précédentes, **caractérisé en ce qu'**une léchette précitée d'un même ensemble comporte un élément d'obturation (24) comprenant une nervure (26) à bord courbe (29), sensiblement radiale et **en ce que** ledit élément d'obturation est rattaché à une lame flexible (30) ancrée au fond d'un support (36a ou 36b) lié à l'arbre interne, dans lequel est définie une cavité cylindrique (38, 38a, 38b) ouverte à une extrémité, ladite cavité cylindrique étant définie à la surface dudit arbre interne et **en ce que** ledit élément d'obturation (24) coopère avec l'extrémité ouverte de ladite cavité cylindrique.

6. Système selon la revendication 5, **caractérisé en ce que** ledit élément d'obturation (24) comporte une portion cylindrique (28) adjacente à ladite nervure plate et rattachée le long d'un bord interne de celle-ci.

7. Système d'étanchéité selon l'une des revendications 5 ou 6 et la revendication 3, **caractérisé en ce que** ledit arbre interne (12) comporte deux cavités cylindriques ouvertes dont lesdites extrémités ouvertes sont en vis-à-vis, les éléments d'obturation d'un même ensemble (20a, 20b) de léchettes (22) coopérant avec l'extrémité ouverte d'une cavité correspondante.

8. Système d'étanchéité selon la revendication 5 ou 6 et la revendication 4, **caractérisé en ce que** ledit arbre interne (12) comporte une seule cavité cylindrique (38) ouverte, les éléments d'obturation des deux ensembles (20a, 20b) de léchettes coopérant en superposition avec l'extrémité ouverte de ladite seule cavité.

9. Système selon l'une des revendications précédentes, **caractérisé en ce que** ladite surface intérieure de l'arbre externe (14) comporte une gorge annulaire (42) située en regard dudit ensemble annulaire sectorisé de léchettes et **en ce qu'**un gicleur de liquide (18) ou analogue est disposé au voisinage de cette gorge et orienté pour y déposer de l'huile à chaque mise en rotation dudit arbre extérieur.

10. Système selon la revendication 9, **caractérisé en ce que** ladite gorge annulaire comporte une barrière de tranquillisation (46) agencée entre une partie annulaire (48) où plongent lesdites léchettes et une partie annulaire (50) adjacente où du liquide est déposé à l'aide dudit gicleur.

11. Turbomachine **caractérisée en ce qu'**elle comporte deux arbres tournants coaxiaux entre lesquels est installé un système d'étanchéité selon l'une des revendications précédentes.

12. Turbomachine selon la revendication 11, **caractérisée en ce que** les deux arbres sont contra-rotatifs.

## Patentansprüche

1. Dichtungssystem zwischen zwei koaxialen und übereinander gelagerten drehenden Wellen, einer inneren Welle (12) bzw. röhrenförmigen äußeren Welle (14), **dadurch gekennzeichnet, dass** es verbunden mit der inneren Welle mindestens eine ringförmige, segmentierte Einheit von Dichtlippen (22) umfasst, die unter der Wirkung der Zentrifugalkraft beweglich ist und sich im Wesentlichen radial zur äußeren Welle verschiebt, sowie einen ringförmigen Behälter (42) für eine Flüssigkeit, der an der Innenfläche der äußeren Welle gegenüber den gekrümmten Rändern der Dichtlippen angeordnet ist, wobei die gekrümmten Ränder in diese Flüssigkeit eintauchen, wenn die Dichtlippen unter der Wirkung der Zentrifugalkraft verschoben werden.

2. System nach Anspruch 1, **dadurch gekennzeichnet, dass** es zwei vorgenannte Einheiten (20a, 20b) von Dichtlippen umfasst, die am Umfang in Bezug zueinander versetzt sind.

3. System nach Anspruch 2, **dadurch gekennzeichnet, dass** die beiden Dichtlippeneinheiten (20a, 20b) einander gegenüber angeordnet sind.

4. System nach Anspruch 2, **dadurch gekennzeichnet, dass** die beiden Dichtlippeneinheiten übereinander angeordnet sind (Figur 3).

5. Dichtungssystem nach einem der vorgenannten Ansprüche, **dadurch gekennzeichnet, dass** eine vorgenannte Dichtlippe einer selben Einheit ein Verschlusselement (24) aufweist, umfassend eine Rippe (26) gekrümmtem Rand (29), die im Wesentlichen radial ist, und dass das Verschlusselement mit einem biegsamen Plättchen (30) verbunden ist, das am Boden einer Stütze (36a oder 36b), die mit der inneren Welle verbunden ist, verankert ist, in der ein zylindrischer Hohlraum (38, 38a, 38b), der an einem Ende offen ist, definiert ist, wobei der zylindrische Hohlraum an der Oberfläche der inneren Welle definiert ist, und dass das Verschlusselement (24) mit dem offenen Ende des zylindrischen Hohlraums zusammenwirkt.

6. System nach Anspruch 5, **dadurch gekennzeichnet, dass** das Verschlusselement (24) einen zylindrischen Abschnitt (28) umfasst, der an die flache Rippe angrenzt und entlang eines inneren Randes derselben befestigt ist.

7. Dichtungssystem nach einem der Ansprüche 5 oder 6 und Anspruch 3, **dadurch gekennzeichnet, dass** die innere Welle (12) zwei offene zylindrische Hohlräume umfasst, deren offene Enden einander gegenüberliegen, wobei die Verschlusselemente einer selben Einheit (20a, 20b) von Dichtlippen (22) mit dem offenen Ende eines entsprechenden Hohlraums zusammenwirken.

8. Dichtungssystem nach Anspruch 5 oder 6 und Anspruch 4, **dadurch gekennzeichnet, dass** die innere Welle (12) einen einzigen offenen zylindrischen Hohlraum (38) umfasst, wobei die Verschlusselemente der beiden Einheiten (20a, 20b) von Dichtlippen in Übereinanderlagerung mit dem offenen Ende des einzigen Hohlraums zusammenwirken.

9. System nach einem der vorhergehenden Ansprüche, **dadurch gekennzeichnet, dass** die Innenfläche der äußeren Welle (14) eine Ringnut (42) umfasst, die gegenüber der segmentierten ringförmigen Einheit von Dichtlippen angeordnet ist, und dass eine Spritzdüse (18) oder dergleichen in der Nähe dieser Nut angeordnet und derart ausgerichtet ist, dass er auf diese ÖI bei jeder Drehung der äußeren Welle aufbringt.

10. System nach Anspruch 9, **dadurch gekennzeichnet, dass** die Ringnut eine Beruhigungsschranke (46) umfasst, die zwischen einem ringförmigen Teil (48), in den die Dichtlippen eintauchen, und einem angrenzenden ringförmigen Teil (50), in den die Flüssigkeit mit Hilfe der Spritzdüse eingeleitet wird, angeordnet ist.

11. Turbomaschine, **dadurch gekennzeichnet, dass** sie zwei koaxiale drehende Wellen umfasst, zwischen denen ein Dichtungssystem nach einem der vorhergehenden Ansprüche installiert ist.

12. Turbomaschine nach Anspruch 11, **dadurch gekennzeichnet, dass** die beiden Wellen gegenläufig drehend sind.

## Claims

1. A sealing system between two coaxial superimposed rotary shafts, respectively an inner shaft (12) and a tubular outer shaft (14), **characterized in that** it includes, connected to the inner shaft, at least one sectorized annular assembly of wipers (22) that is movable under the effect of centrifugal force and that moves substantially radially towards the outer shaft, and an annular receptacle (42) for liquid arranged in the inside surface of the outer shaft facing curved edges of said wipers, said curved edges dipping into said liquid when said wipers are moved under the effect of centrifugal force.

2. A system according to claim 1, **characterized in that** it has two of the above-specified assemblies (20a, 20b) of wipers that are offset circumferentially relative to each other.

3. A system according to claim 2, **characterized in that** the two assemblies of wipers (20a, 20b) are arranged facing each other.

4. A system according to claim 2, **characterized in that** the two assemblies of wipers are superimposed, one over the other (Figure 3).

5. A sealing system according to any one of the preceding claims, **characterized in that** an above-specified wiper in a given assembly comprises a shutter element (24) having a substantially radial rib (26) with a curved edge (29), and **in that** said shutter element is connected to a flexible blade (30) anchored to the bottom of a support (36a or 36b) connected to the inner shaft, in which there is defined a cylindrical cavity (38, 38a, 38b) that is open at one end, said cylindrical cavity being defined in the surface of said inner shaft; and **in that** said shutter element (24) co-operates with the open end of said cylindrical cavity.

6. A system according to claim 5, **characterized in that** said shutter element (24) includes a cylindrical portion (28) adjacent to said flat rib and attached along an inside edge thereof.

7. A sealing system according to any one of claims 5 or 6 and to claim 3, **characterized in that** said inner shaft (12) has two open cylindrical cavities of which said open ends face each other, the shutter elements in a given assembly (20a, 20b) of wipers (22) co-operating with the open end of a corresponding cavity.

8. A sealing system according to claim 5 or 6 and to claim 4, **characterized in that** said inner shaft (12) has a single open cavity (38), the shutter elements of the two assemblies (20a, 20b) of wipers co-operating in superposition with the open end of said single cavity.

9. A system according to any one of the preceding claims, **characterized in that** said inside surface of the outer shaft (14) includes an annular groove (42) situated facing said sectorized annular assembly of wipers, and **in that** a nozzle for liquid (18) or the like is disposed in the vicinity of said groove and is oriented to deposit oil therein on each occasion said outer shaft is set into rotation.

10. A system according to claim 9, **characterized in that** said annular groove includes a settling barrier (46) arranged between an annular portion (48) into which said wipers dip and an adjacent annular portion (50) in which the liquid is deposited using said nozzle.

11. A turbomachine, **characterized in that** it includes two coaxial rotary shafts between which there is installed a sealing system according to any preceding claim.

12. A turbomachine according to claim 11, **characterized in that** the two shafts are contra-rotating shafts.
